# FASCICULE DE BREVET EUROPEEN

(11) **EP 1 412 210 B1**
(45) Date de publication et mention de la délivrance du brevet: **16.04.2008**
(21) Numéro de dépôt: 02762511.0
(22) Date de dépôt: 02.07.2002
(51) Int. Cl.: B60G 9/00, B60G 11/27, B60G 21/05, B60G 7/00

(54) **ENSEMBLE DE SUSPENSION AVANT PNEUMATIQUE POUR VEHICULE INDUSTRIEL**
PNEUMATISCHE VORDERRADAUFHÄNGUNGSANORDNUNG FÜR INDUSTRIEFAHRZEUG
PNEUMATIC FRONT SUSPENSION ASSEMBLY FOR INDUSTRIAL VEHICLE

(30) Priorité: 27.07.2001 FR 0110091
(43) Date de publication de la demande: 28.04.2004
(73) Titulaire: RENAULT TRUCKS, 69800 St Priest (FR)
(72) Inventeur: RENAUDOT, Jérôme, F-69003 Lyon (FR)
(74) Mandataire: Vuillermoz, Bruno
(86) Numéro de dépôt international: PCT/FR2002/002307
(87) Numéro de publication internationale: WO 2003/011620

(56) Documents cités:
- WO-A-00/76795
- US-A- 4 541 653
- US-A- 4 856 812
- US-A- 6 086 077

## Description

### Domaine technique

L'invention se rattache au domaine des véhicules industriels. Elle concerne plus particulièrement les véhicules équipés à l'avant d'un essieu rigide, associé à un dispositif de suspension pneumatique. Elle vise plus spécifiquement un ensemble de suspension qui assure un guidage optimal de l'essieu avant tout en autorisant une importante course verticale de ce dernier.

### Techniques antérieures

De façon générale, la suspension avant d'un véhicule permet de relier l'essieu avant au châssis par l'intermédiaire d'un organe élastique et d'amortisseurs. De façon répandue, les véhicules industriels sont équipés de suspensions pneumatiques qui procurent un meilleur confort ainsi que d'autres avantages par rapport aux suspensions purement mécaniques. Une suspension pneumatique comprend donc de façon principale un coussin pneumatique solidaire à la fois de l'essieu et du châssis. Plus précisément, le coussin est relié sur les longerons présents de chaque côté du châssis. La commande appropriée du coussin pneumatique permet d'assurer le réglage en hauteur des longerons par rapport à l'essieu.

Différentes solutions ont déjà été proposées pour réaliser des suspensions pneumatiques pour l'essieu avant.

Ainsi, une première solution consiste à monter l'essieu sur une lame de ressort déformable. Cette lame de ressort est reliée par une extrémité aux longerons du châssis. L'autre extrémité de la lame est reliée au châssis par un organe pivotant tel qu'une jumelle. Le coussin pneumatique est interposé entre la lame déformable et le longeron. En fonction de la commande du coussin pneumatique, la lame ressort est plus ou moins déformée, cette déformation se traduisant par un pivotement de la jumelle de liaison de la lame ressort avec les longerons.

Un tel dispositif est notamment décrit dans le document US 5 873 581. Cette solution présente un certain nombre d'inconvénients.

En effet, la course du châssis par rapport à l'essieu est relativement limitée, puisqu'elle dépend de la capacité de déformation de la lame de ressort. Or, pour présenter une solidité suffisante, cette lame doit être suffisamment épaisse, ce qui limite la possibilité de déformation. A l'inverse, la capacité de déformation de la lame de ressort entraîne un mauvais guidage de l'essieu, puisque la lame peut se déformer en torsion du fait de sa relativement faible épaisseur, comparée à sa largeur. On observe donc des mouvements transversaux de l'essieu qui sont préjudiciables à la bonne tenue de route.

Un tel dispositif est aussi décrit dans les documents US 60 86 077 et WO 00 76 795.

Un problème que se propose de résoudre l'invention est celui d'autoriser une course importante du châssis par rapport à l'essieu, sans induire de mouvement transversal.

Une autre solution a été proposée dans laquelle l'essieu est relié aux longerons par l'intermédiaire de deux bielles longitudinales disposées en parallèle. Ces bielles forment un parallélogramme déformable avec une pièce support solidaire de l'essieu. La commande du coussin pneumatique éloigne ou rapproche l'essieu du longeron, en provoquant le pivotement des bielles parallèles par rapport aux longerons. Pour assurer la reprise des efforts transversaux, le dispositif comprend une bielle transversale, reliant un longeron avec la pièce support associée au longeron opposé. Cette solution présente l'inconvénient de procurer une mauvaise cinématique, puisque la bielle transversale se déplace selon un arc de cercle lors de débattements verticaux de l'essieu. Le mouvement de cette bielle transversale induit donc des mouvements transversaux de l'essieu, qui dégradent la tenue de route.

Un problème que se propose de résoudre l'invention est donc celui d'assurer un bon guidage de l'essieu latéral en éliminant autant que possible les mouvements transversaux de l'essieu lors des débattements verticaux de ce dernier.

Une autre solution a été décrite dans le document EP 0 940 272, dans laquelle l'essieu est monté sous un bras rigide pivotant par rapport aux longerons. Le réglage du coussin pneumatique interposé entre ce bras rigide et le longeron provoque le pivotement de ce bras rigide. Pour assurer la reprise des efforts transversaux, la présence d'une bielle transversale est nécessaire, avec les inconvénients concernant la cinématique correspondante, décrits précédemment.

Une autre solution a été décrite dans le document US 6 015 158. Dans cette solution, l'essieu est relié aux longerons par l'intermédiaire d'une lame ressort flexible, et d'un mécanisme pivotant. Plus précisément, l'essieu est monté sur une lame flexible dont une extrémité est reliée aux longerons. L'autre extrémité de cette lame flexible est articulée sur un mécanisme incluant le coussin pneumatique ainsi qu'un plot élastique.

Cette solution permet de cumuler les effets amortissants du coussin pneumatique et du plot en caoutchouc. Cependant, cette solution présente l'inconvénient inhérent à l'utilisation d'une lame de ressort, c'est-à-dire une faible course, et une tendance à autoriser les mouvements transversaux qui sont néfastes pour la tenue de route.

### Exposé de l'invention

L'invention concerne donc un ensemble de suspension avant pneumatique pour véhicules industriels. De façon connue, cet ensemble de suspensions comporte :
◆ un essieu avant relié à une paire de longerons ;
◆ une paire de coussins pneumatiques assurant le réglage en hauteur de l'essieu par rapport aux longerons.

Conformément à l'invention, l'ensemble de suspension se caractérise en ce qu'il comprend, de chaque côté :
■ un bras rigide dont une extrémité est articulée par rapport aux longerons, et dont l'autre extrémité reçoit l'essieu et la partie inférieure d'un des coussins pneumatiques ;
■ une paire de bielles articulées entre elles selon un axe sensiblement parallèle à l'essieu, une de ces bielles, la bielle supérieure, étant articulée par rapport au longeron, l'autre bielle, la bielle inférieure, étant articulée par rapport au bras rigide.

L'ensemble de suspension comporte également un élément supplémentaire, en forme générale de U, et formant une barre anti-roulis. Cette barre anti-roulis comporte :
◆ une tige transversale reliée aux barres inférieures au niveau de leurs points d'articulation avec les bras rigides ;
◆ des branches situées de part et d'autre de la tige transversale, ces branches étant reliées aux bielles inférieures.

Autrement dit, la suspension se compose de chaque côté d'un parallélogramme déformable constitué par le longeron, le bras rigide et les deux bielles articulées. L'essieu est situé à proximité du sommet de ce parallélogramme déformable correspondant à l'articulation du bras rigide et de la bielle caractéristique inférieure. Le réglage en hauteur du châssis par rapport à l'essieu est déterminé par la commande du coussin pneumatique, qui relie donc le sommet du parallélogramme évoqué ci-avant et le longeron correspondant.

Le réglage en hauteur du longeron par rapport au châssis s'effectue sans aucune déformation élastique des différents éléments constituant la suspension, mais au contraire par la déformation géométrique du parallélogramme déformable caractéristique. Il est donc ainsi possible de régler la course du longeron par rapport à l'essieu par un choix optimisé des dimensions de chacun des éléments, et notamment des deux bielles caractéristiques. On peut ainsi atteindre des courses de l'ordre de 250 millimètres, à comparer aux valeurs de 180 millimètres correspondant aux courses généralement observées sur les véhicules de l'Art antérieur.

En outre, la paire de bielles caractéristiques est articulée selon un axe sensiblement parallèle à l'essieu, de sorte que ces bielles agissent à la manière de deux jumelles de relativement grande largeur.

Cette configuration permet la reprise des efforts transversaux. La suspension est donc exempte de toute bielle transversale dont on a vu précédemment qu'elle engendrait une cinématique préjudiciable à la tenue de route. La déformation du parallélogramme déformable s'opère donc dans un même plan sensiblement vertical, sans risque de voir l'essieu se déplacer transversalement.

En pratique, le bras rigide est articulé au longeron par son extrémité avant, de sorte que les bielles caractéristiques sont situées à l'arrière de l'essieu, dans le sens du déplacement du véhicule.

En outre, la barre anti-roulis couple la déformation des deux suspensions assurant ainsi une augmentation de la raideur anti-roulis, cette raideur pouvant être adaptée en fonction de l'usage du véhicule.

Avantageusement en pràtique, les branches de la barre anti-roulis sont reliées aux bielles inférieures au niveau des articulations de ces dernières avec les bielles supérieures.

Dans une forme préférée, les caractéristiques de la suspension sont améliorées par l'adjonction d'amortisseurs supplémentaires, articulés à la fois sur les longerons et sur les bras rigides.

En pratique, chacun des bras rigides présente au niveau de son extrémité arrière, une zone élargie sur laquelle est montée la partie inférieure du coussin pneumatique. Avantageusement en pratique, cette zone élargie est solidarisée à la face supérieure de l'essieu.

### Description sommaire des figures

La manière de réaliser l'invention ainsi que les avantages qui en découlent ressortiront bien de la description du mode de réalisation qui suit, à l'appui des figures annexées dans lesquelles :
La figure 1 est une vue en perspective sommaire vu de trois quarts arrière de deux ensembles de suspension droit et gauche conformes à l'invention.
Les figures 2 et 3 sont des vues de côté de l'ensemble de suspension de la figure 1, montrée respectivement dans deux positions de réglage du coussin pneumatique.

### Manière de réaliser l'invention

Comme déjà évoqué, l'invention concerne un ensemble de suspension équipant l'essieu avant d'un véhicule industriel.

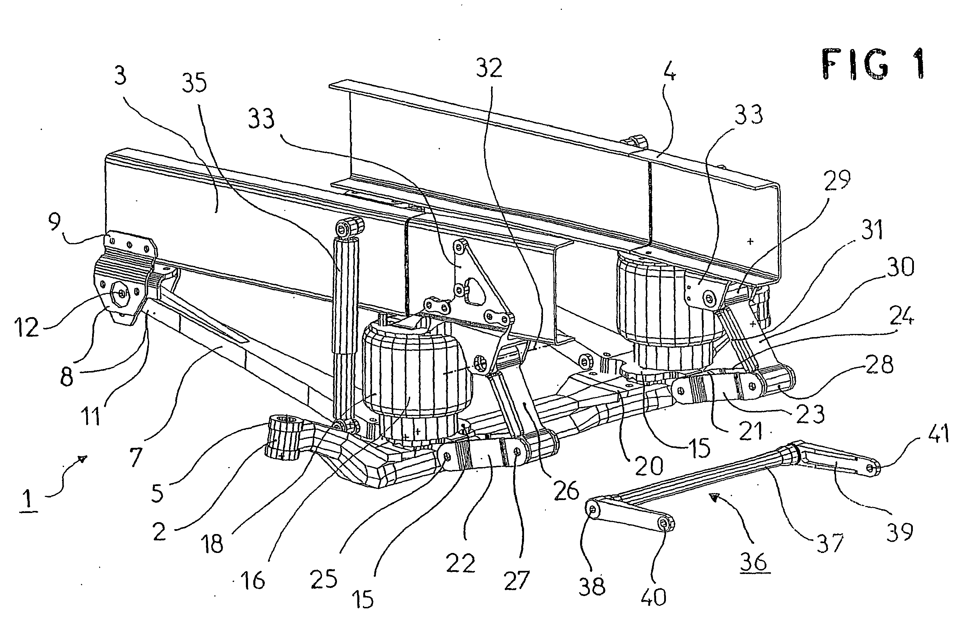

Plus précisément, et comme illustré à la figure 1, un tel ensemble de suspension (1) permet de régler la hauteur du châssis par rapport à l'essieu. Dans la forme illustrée à la figure 1, le châssis est représenté uniquement par deux longerons (3, 4) situés de part et d'autre du véhicule. L'essieu avant (2) illustré à la figure 1 s'étend entre les deux longerons (3, 4) et se prolonge latéralement par des portions légèrement relevées (5), destinées à recevoir les fusées.

Conformément à l'invention, le dispositif de suspension comprend, de chaque côté, un bras rigide (7), qui est articulé par rapport aux longerons (3). L'articulation avec le longeron (3) s'effectue par l'intermédiaire d'une main de ressort (8). Cette main de ressort (8) est fixée par sa partie haute (9) par exemple par vissage sur le longeron (3). La partie basse (10) de cette main de ressort (8) enjambe l'extrémité avant (11) du bras rigide (3) autorisant le passage d'un axe d'articulation (12) traversant l'extrémité avant de ce bras (3).

Ce bras rigide se prolonge vers l'arrière en s'élargissant pour former une plateforme (15) destinée à recevoir la partie basse du coussin pneumatique (16). Plus précisément, le pied (17) du coussin pneumatique (16) est fixé, par exemple par vissage, sur cette zone élargie (15) formant plateforme. Cette zone élargie (15) est également vissée sur la face supérieure (20) de l'essieu (2), de sorte que l'essieu (2) peut donc pivoter par rapport aux longerons (3, 4) autour de l'axe (12). Dans sa partie arrière, la plateforme (15) formant l'extrémité du bras rigide (7) comporte un tourillon (21). Ce tourillon (21) reçoit une bielle (22) formée de deux plaques verticales parallèles (23, 24). A l'opposé de l'axe d'articulation (25) par rapport au bras (7), cette bielle inférieure (22) est articulée par rapport à la bielle supérieure (26) autour de l'axe (27). Cet axe (27) est sensiblement parallèle à l'essieu (2). Cette bielle supérieure (26) comporte un tourillon (28, 29) à chacune de ses extrémités, et deux plaques parallèles (30, 31) présentant une largeur sensiblement égale à la distance séparant les plaques (23, 24) formant la bielle inférieure (22). Le tourillon supérieur (29) de la bielle supérieure (26) est articulé par rapport à une chappe (33) fixée sur le longeron (4).

De la sorte, l'ensemble formé par le longeron (3), la bielle supérieure (26), la bielle inférieure (22) et le bras rigide (7) forme un parallélogramme déformable dont les sommets sont constitués par les quatre axes d'articulation (12, 25, 27, 32).

La déformation de ce parallélogramme est assurée par l'action du coussin pneumatique (16). Comme déjà évoqué, le pied (17) de ce coussin pneumatique (16) est fixé sur l'extrémité arrière du bras rigide (3). La tête (18) du coussin pneumatique est quant à elle solidaire du longeron (3) par l'intermédiaire d'une pièce de support (33). L'alimentation appropriée du coussin pneumatique (16) permet donc d'assurer le réglage de hauteur entre le bras rigide (7) et donc l'essieu (2), et le longeron (3).

De façon complémentaire, l'ensemble de suspension comprend également un amortisseur (35) hydraulique articulé sur le longeron (3) et sur le bras rigide (7). Cet amortisseur (35) complète la fonction de suspension assurée par le coussin pneumatique (16).

Comme illustré à la figure 1, les deux ensembles de suspension situés de chaque côté du véhicule sont couplés par une barre anti-roulis (36). Cette barre anti-roulis (36) comporte une barre transversale (37) montée entre les extrémités basses des bielles inférieures (22). Cette barre transversale (37) est montée colinérairement à l'axe de pivotement (25) des bielles inférieures (22) par rapport au bras rigide (3). Cette barre transversale (37) est complétée par deux branches latérales (38, 39) dont les extrémités libres (40, 41) sont elles-mêmes fixées au niveau des axes d'articulation (27) des bielles supérieure (26) et inférieure (22). Dans la forme illustrée, et pour une meilleure compréhension, la barre anti-roulis (36) a été représentée avant son installation.

Compte tenu de la largeur des bielles supérieure (26) et inférieure (22), les efforts transversaux sont repris au niveau des axes d'articulation (25, 27, 32) des bielles supérieure (26) et inférieure (22) entre elles et par rapport à la fois aux longerons (3, 4) et aux bras rigides (7). On obtient donc un excellent guidage transversal qui permet d'améliorer la tenue de route du véhicule.

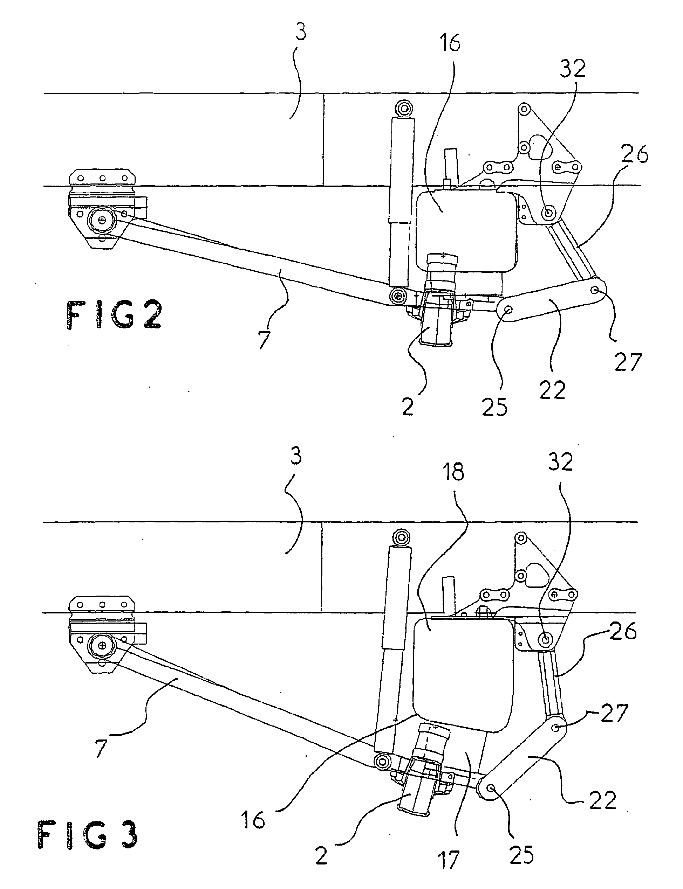

Les figures 2 et 3 illustrent deux positions différentes de réglage de hauteur du longeron par rapport à l'essieu. Ainsi, dans la figure 2, le coussin pneumatique (16) est représenté dans sa configuration la plus compacte. Dans ce cas, les bielles supérieure (26) et inférieure (22) forment sensiblement un angle aigu, de telle sorte que le bras rigide (7) est dans sa position la plus proche du longeron (3). Dans ce cas de figure, la distance entre l'essieu (2) et le longeron (3) est donc réduite.

A l'inverse, et dans la situation illustrée à la figure 3, le coussin pneumatique (16) est dans sa configuration la plus déployée. Dans ce cas, les deux bielles inférieure (22) et supérieure (26) forment entre elles un angle obtu, et le bras rigide (7) est dans sa position la plus éloignée du longeron (3).

Les deux longerons (3) sont donc dans une position haute par rapport à l'essieu (2).

La course du longeron (3) par rapport à l'essieu (2), correspondant à la différence de hauteur mesurée entre les figures 2 et 3 est supérieure à 250 millimètres, à comparer avec les courses de 180 millimètres généralement observées dans les suspensions de même catégorie.

Il ressort de ce qui précède que l'ensemble de suspension conforme à l'invention présente de multiples avantages, et notamment celui d'autoriser une course relativement importante de l'essieu par rapport au châssis, tout en assurant un guidage transversal sans défaut, c'est-à-dire avec un débattement de l'essieu purement vertical.

## Revendications

1. Ensemble de suspension avant pneumatique (1) pour véhicule industriel comportant :
■ un essieu avant (2) relié à une paire de longerons (3, 4) ;
■ une paire de coussins pneumatiques (16) assurant le réglage en hauteur de l'essieu (2) par rapport aux longerons (3, 4),
**caractérisé en ce qu'**il comprend, de chaque côté :
■ un bras rigide (7) dont une extrémité (11) est articulée par rapport aux longerons (3), et dont l'autre extrémité reçoit l'essieu (2) et la partie inférieure (17) d'un des coussins pneumatiques (16) ;
■ une paire de bielles (22, 26) articulées entre elles selon un axe (27) sensiblement parallèle à l'essieu (2), une de ces bielles, la bielle supérieure (26), étant articulée par rapport au longeron (3), l'autre bielle, la bielle inférieure (22), étant articulée par rapport au bras rigide (7),
ainsi qu'un élément supplémentaire (36) en forme générale de U, formant barre anti-roulis, et comportant :
■ une tige transversale (37) reliée aux bielles inférieures (22) au niveau de leurs points d'articulation (25) avec les bras rigides (7) ;
■ des branches situées (38, 39) de part et d'autre de la tige transversale (37), et reliées aux bielles inférieures (22).

2. Ensemble de suspension selon la revendication 1, **caractérisé en ce que** le bras rigide (7) est articulé au longeron (3) par son extrémité avant (11).

3. Ensemble de suspension selon la revendication 1, **caractérisé en ce que** les branches (38, 39) de la barre anti-roulis (36) sont reliées aux bielles inférieures (22) au niveau de leurs articulations (27) avec les bielles supérieures (26).

4. Ensemble de suspension selon la revendication 1, **caractérisé en ce qu'**il comporte également des amortisseurs supplémentaires (35), articulés sur les longerons (3) et les bras rigides (7).

5. Ensemble de suspension selon la revendication 1, **caractérisé en ce que** le bras rigides (7) présente au niveau de son extrémité arrière une zone élargie (15) sur laquelle est montée la partie inférieure (17) du coussin pneumatique (16).

6. Ensemble de suspension selon la revendication 5, **caractérisé en ce que** la zone élargie (15) est solidarisée à la face supérieure (20) de l'essieu (2).

## Claims

1. A pneumatic front suspension assembly (1) for industrial vehicle comprising:
■ a front axle (2) linked to a pair of side members (3, 4);
■ a pair of air bags (16) for adjusting the height of the axle (2) relative to the side members (3, 4),
**characterized in that** it comprises, on each side:
■ a rigid arm (7), of which one extremity (11) is articulated relative to the side members (3) and of which the other extremity receives the axle (2) and the bottom part (17) of one of the air bags (16);
■ a pair of links (22, 26) mutually articulated about a pin (27) substantially parallel to the axle (2), one of these links, the upper link (26), being articulated relative to the side member (3), the other link, the lower link (22), being articulated relative to the rigid arm (7),
and a basically U-shaped additional element (36) forming an anti-roll bar, and comprising:
■ a transverse rod (37) linked to the lower links (22) at their articulation points (25) with the rigid arms (7);
■ branches (38, 39) located on either side of the transverse rod (37), and linked to the lower links (22).

2. The suspension assembly as claimed in claim 1, **characterized in that** the rigid arm (7) is articulated to the side member (3) by its front extremity (11).

3. The suspension assembly as claimed in claim 1, **characterized in that** the branches (38, 39) of the anti-roll bar (36) are linked to the lower links (22) at their articulations (27) with the upper links (26) .

4. The suspension assembly as claimed in claim 1, **characterized in that** it also has supplementary shock absorbers (35), articulated on the side members (3) and the rigid arms (7).

5. The suspension assembly as claimed in claim 1, **characterized in that** the rigid arm (7) presents at its rear extremity a broadened area (15) on which is mounted the bottom part (17) of the air bag (16).

6. The suspension assembly as claimed in claim 5, **characterized in that** the broadened area (15) is made integral with the upper face (20) of the axle (2).

## Patentansprüche

1. Pneumatische Frontaufhängungseinheit (1) für ein Industriefahrzeug, umfassend:
- eine mit einem Paar von Längsträgern (3, 4) verbundene Vorderradachse (2);
- ein Paar von Luftfedern (16), die die Höheneinstellung der Radachse (2) bezüglich der Längsträger (3, 4) gewährleisten,
**dadurch gekennzeichnet, dass** sie auf jeder Seite umfasst:
- einen starren Arm (7), dessen eines Ende (11) an den Längsträgern (3) angelenkt ist und dessen anderes Ende die Radachse (2) und den unteren Teil (17) einer der Luftfedern (16) aufnimmt;
- ein Paar von Schwingarmen (22, 26), die über eine zur Radachse (2) im Wesentlichen parallele Achse (27) aneinander angelenkt sind, wobei einer dieser Schwingarme, und zwar der obere Schwingarm (26), an dem Längsträger (3) angelenkt ist und der andere Schwingarm, und zwar der untere Schwingarm (22), an dem starren Arm (7) angelenkt ist,
sowie ein allgemein U-förmiges Zusatzelement (36), das einen Stabilisatorstab bildet und umfasst:
- eine Querstange (37), die mit den unteren Schwingarmen (22) auf Höhe ihrer Anlenkungspunkte (25) an den starren Armen (7) verbunden ist;
- Schenkel (38, 39), die zu beiden Seiten der Querstange (37) gelegen sind und mit den unteren Schwingarmen (22) verbunden sind.

2. Aufhängungseinheit nach Anspruch 1, **dadurch gekennzeichnet, dass** der starre Arm (7) an dem Längsträger (3) über sein vorderes Ende (11) angelenkt ist.

3. Aufhängungseinheit nach Anspruch 1, **dadurch gekennzeichnet, dass** die Schenkel (38, 39) des Stabilisatorstabs (36) mit den unteren Schwingarmen (22) auf Höhe ihrer Anlenkungen (27) an den oberen Schwingarmen (26) verbunden sind.

4. Aufhängungseinheit nach Anspruch 1, **dadurch gekennzeichnet, dass** sie ferner Zusatzdämpfer (35) umfasst, die an den Längsträgern (3) und an den starren Armen (7) angelenkt sind.

5. Aufhängungseinheit nach Anspruch 1, **dadurch gekennzeichnet, dass** der starre Arm (7) auf Höhe seines hinteren Endes eine verbreiterte Zone (15) aufweist, auf der der untere Teil (17) der Luftfeder (16) montiert ist.

6. Aufhängungseinheit nach Anspruch 5, **dadurch gekennzeichnet, dass** die verbreiterte Zone (15) mit der Oberseite (20) der Radachse (2) fest verbunden ist.
